# EUROPEAN PATENT APPLICATION

(11) **EP 4 815 165 A1**
(43) Date of publication of application: **30.09.2026**
(21) Application number: 26167715.7
(22) Date of filing: 25.03.2026
(51) Int. Cl.: H01M 50/409, H01M 10/0525, D01D 5/00, H01M 50/414, H01M 50/42, H01M 50/423, H01M 50/426, H01M 50/429, H01M 50/44, H01M 50/446, H01M 50/46

(54) **ELECTRODE ASSEMBLY, MANUFACTURING METHODS THEREOF, AND RECHARGEABLE LITHIUM BATTERIES**

(30) Priority: 26.03.2025 KR 20250038980
(71) Applicant: SAMSUNG SDI CO., LTD., Yongin-si, Gyeonggi-do 17084 (KR); Industry-Academic Cooperation Foundation Dankook University, Yongin-si, Gyeonggi-do 16890 (KR)
(72) Inventor: YANG, Hosung, 17084 Yongin-si, Gyeonggi-do (KR); PARK, Changwon, 17084 Yongin-si, Gyeonggi-do (KR); YOU, Duckjae, 17084 Yongin-si, Gyeonggi-do (KR); YUK, Seoyeon, 17084 Yongin-si, Gyeonggi-do (KR); WOO, Jiye, 17084 Yongin-si, Gyeonggi-do (KR); LEE, Donggeun, 17084 Yongin-si, Gyeonggi-do (KR); LEE, Byoung-Sun, 16903 Yongin-si, Gyeonggi-do (KR); HONG, Seok-won, 16890 Yongin-si, Gyeonggi-do (KR)
(74) Representative: Michalski Hüttermann & Partner mbB

(57) **Abstract**

Disclosed are an electrode assembly, a method for manufacturing the electrode assembly and a rechargeable lithium battery including the electrode assembly. The electrode assembly includes an electrode current collector, an electrode active material layer on the electrode current collector, and a coating layer disposed on the electrode active material layer and integrated with the electrode active material layer. The coating layer includes a polymer nanofiber, the polymer nanofiber includes a first binder and a second binder, the first binder includes polyimide, the second binder includes at least one of polyvinylidene fluoride, polyvinylidene fluoride-trifluoroethylene, polyvinylidene fluoride-tetrafluoroethylene, polyvinylidene fluoride-hexafluoropropylene, polyvinylidene fluoride-trifluoroethylene-chlorotrifluoroethylene, polyamide, styrene butadiene rubber, carboxymethyl cellulose, an epoxy resin, polymethyl methacrylate, or a combination thereof.

## Description

### BACKGROUND

### 1. Field

Electrode assemblies, manufacturing methods thereof, and rechargeable lithium batteries are disclosed.

### 2. Description of the Related Art

A portable information device such as, e.g., a cell phone, a laptop, smart phone, and the like, or an electric vehicle, typically uses a rechargeable lithium battery having high energy density and ready portability as a driving power source. Accordingly, using a rechargeable lithium battery with high energy density as a driving power source or power storage power source for hybrid or electric vehicles may be advantageous.

Rechargeable lithium batteries include a positive electrode and a negative electrode, both the positive electrode and the negative electrode including an active material capable of intercalating and deintercalating lithium ions, and an electrolyte solution, and electrical energy is produced through oxidation and reduction reactions when lithium ions are intercalated/deintercalated from the positive electrode and negative electrode.

Transition metal compounds such as lithium cobalt-based oxide, lithium nickel-based oxide, and lithium manganese-based oxide are typically used as positive electrode active materials for rechargeable lithium batteries, and crystalline carbon materials such as natural graphite or artificial graphite or amorphous carbon materials are typically used as negative electrode active materials.

### SUMMARY

Some example embodiments include an electrode assembly capable of replacing an existing separator while ensuring desired or improved thermal stability and mechanical strength by integrating a coating layer functioning as a separator with an electrode active material layer, a method for manufacturing the electrode assembly, and a rechargeable lithium battery having desired or improved charge/discharge performance.

Some example embodiments include an electrode assembly including an electrode current collector; an electrode active material layer on the electrode current collector, and a coating layer disposed on the electrode active material layer and integrated with the electrode active material layer. The coating layer includes a polymer nanofiber, the polymer nanofiber includes a first binder and a second binder, the first binder includes polyimide, and the second binder includes at least one of polyvinylidene fluoride, polyvinylidene fluoride-trifluoroethylene, polyvinylidene fluoride-tetrafluoroethylene, polyvinylidene fluoride-hexafluoropropylene, polyvinylidene fluoride-trifluoroethylene-chlorotrifluoroethylene, polyamide, styrene butadiene rubber, carboxymethyl cellulose, an epoxy resin, polymethyl methacrylate, or a combination thereof.

Some example embodiments include a method for manufacturing an electrode assembly, the method including forming an electrode active material layer on an electrode current collector, preparing a polymer composition by mixing polyamic acid, a quinoline-based derivative, and a second binder in a solvent, and electrospinning the polymer composition on the electrode active material layer. The second binder includes at least one of polyvinylidene fluoride, polyvinylidene fluoride-trifluoroethylene, polyvinylidene fluoride-tetrafluoroethylene, polyvinylidene fluoride-hexafluoropropylene, polyvinylidene fluoride-trifluoroethylene-chlorotrifluoroethylene, polyamide, styrene butadiene rubber (SBR), carboxymethyl cellulose, an epoxy resin, polymethyl methacrylate, or a combination thereof.

Some example embodiments include a rechargeable lithium battery including the aforementioned electrode assembly.

According to some example embodiments, provided are an electrode assembly and a manufacturing method thereof, which can replace an existing separator while ensuring desired or improved thermal stability and mechanical strength by integrating a coating layer that constitutes a separator with an electrode active material layer, and a rechargeable lithium battery having desired or improved charge/discharge performance.

### BRIEF DESCRIPTION OF THE DRAWINGS

FIG. 1 to FIG. 4 are cross-sectional views schematically showing a generally known rechargeable lithium batteries.
FIG. 5 is an image of the surface of the coating layer of the electrode assembly manufactured in Example 1 immediately after the electrospinning process was performed, taken using a scanning electron microscope (SEM).
FIG. 6 is an image of the surface of the coating layer of the electrode assembly manufactured in Comparative Example 1 immediately after the electrospinning process was performed, taken using a scanning electron microscope (SEM).
FIG. 7 is an image of the surface of the coating layer of the electrode assembly manufactured in Example 1 immediately after performing a heat pressing process, taken using a scanning electron microscope (SEM).
FIG. 8 is an image of the surface of the coating layer of the electrode assembly manufactured in Comparative Example 1 immediately after performing the thermal compression process, taken using a scanning electron microscope (SEM).
FIG. 9 shows the results of a tensile test performed on an electrode assembly manufactured in Example 1, measuring the change in stress according to strain.
FIG. 10 shows the results of a tensile test performed on an electrode assembly manufactured in Example 2, measuring the change in stress according to strain.
FIG. 11 shows the results of a tensile test performed on an electrode assembly manufactured in Comparative Example 1, measuring the change in stress according to strain.
FIG. 12 is a discharge curve according to rate for a rechargeable lithium battery manufactured in Example 1.
FIG. 13 is a discharge curve according to rate for a rechargeable lithium battery manufactured in Comparative Example 2.
FIG. 14 shows the results of measuring differential scanning calorimetry (DSC) according to temperature to evaluate the thermal stability of the electrode assembly manufactured in Example 1 and the commercial separator used in Comparative Example 2.
FIG. 15 is a flowchart illustrating a method of manufacturing an electrode assembly, according to an example embodiment.

### DETAILED DESCRIPTION

Hereinafter, example embodiments are described in detail so that those of ordinary skill in the art can readily implement the example embodiments. However, this disclosure may be embodied in many different forms and is not construed as limited to the example embodiments set forth herein.

The terminology used herein is used to describe example embodiments only, and is not intended to limit the present disclosure. The singular expression includes the plural expression unless the context clearly dictates otherwise.

As used herein, "combination thereof" means a mixture, a laminate, a composite, a copolymer, an alloy, a blend, a reaction product, and the like of the constituents.

Herein, it should be understood that terms such as "comprises," "includes," or "have" are intended to designate the presence of an embodied feature, number, step, element, or a combination thereof, but does not preclude the possibility of the presence or addition of one or more other features, number, step, element, or a combination thereof.

In the drawings, the thickness of layers, films, panels, regions, and the like, are exaggerated for clarity and like reference numerals designate like elements throughout the specification. It is understood that when an element such as a layer, film, region, or substrate is referred to as being "on" another element, the element can be directly on the other element or intervening elements may also be present therebetween. In contrast, when an element is referred to as being "directly on" another element, there are no intervening elements present.

In addition, "layer" herein includes not only a shape formed on the whole surface when viewed from a plan view, but also a shape formed on a partial surface.

The average particle diameter may be measured by a method known to those skilled in the art, for example, by a particle size analyzer, or by a transmission electron microscope image or a scanning electron microscope image. Alternatively, it is possible to obtain an average particle diameter value by measuring using a dynamic light scattering method, performing data analysis, counting the number of particles for each particle size range, and calculating from this. Unless otherwise defined, the average particle diameter (D₅₀) may mean the diameter of particles having a cumulative volume of 50 volume% in the particle size distribution. As used herein, when a definition is not otherwise provided, the average particle diameter (D₅₀) means a diameter of particles having a cumulative volume of 50 volume% in the particle size distribution that is obtained by measuring the size (diameter or major axis length) of about 20 particles at random in a scanning electron microscope image.

Herein, "or" is not to be construed as an exclusive meaning, for example, "A or B" is construed to include A, B, A+B, and the like.

"Metal" is interpreted as a concept including ordinary metals, transition metals and metalloids (semi-metals).

Herein, "thickness" may be measured, for example, from photographs taken with an optical microscope such as a scanning electron microscope.

Herein, the term "weight average molecular weight" refers to a weight average molecular weight (Mw) measured by gel permeation chromatography (GPC). For example, the weight average molecular weight may be determined by GPC using polystyrene standards for calibration.

As used herein, when a definition is not otherwise provided, "substituted" refers to replacement of at least one hydrogen of a substituent or a compound by a substituent of at least one of a deuterium, a halogen, a hydroxyl group, an amino group, a C1 to C30 amine group, a nitro group, a C1 to C40 silyl group, a C1 to C30 alkyl group, a C1 to C10 alkylsilyl group, a C6 to C30 arylsilyl group, a C3 to C30 cycloalkyl group, a C3 to C30 heterocycloalkyl group, a C6 to C30 aryl group, a C2 to C30 heteroaryl group, a C1 to C20 alkoxy group, a C1 to C10 fluoroalkyl group, a cyano group, or a combination thereof.

For example, "substituted" may refer to replacement of at least one hydrogen of a substituent or a compound by deuterium, a halogen, a C1 to C30 alkyl group, a C1 to C10 alkylsilyl group, a C6 to C30 arylsilyl group, a C3 to C30 cycloalkyl group, a C3 to C30 heterocycloalkyl group, a C6 to C30 aryl group, a C2 to C30 heteroaryl group, a C1 to C10 fluoroalkyl group, or a cyano group. For example, "substituted" may refer to replacement of at least one hydrogen of a substituent or a compound by deuterium, a halogen, a C1 to C20 alkyl group, a C6 to C30 aryl group, a C1 to C10 fluoroalkyl group, or a cyano group. Alternatively, "substituted" may refer to replacement of at least one hydrogen of a substituent or a compound by deuterium, a halogen, a C1 to C5 alkyl group, a C6 to C18 aryl group, a C1 to C5 fluoroalkyl group, or a cyano group. For example, "substituted" may refer to replacement of at least one hydrogen of a substituent or a compound by deuterium, a cyano group, a halogen, a methyl group, an ethyl group, a propyl group, a butyl group, a phenyl group, a biphenyl group, a terphenyl group, a trifluoromethyl group, or a naphthyl group.

When the terms "about" or "substantially" are used in this specification in connection with a numerical value, it is intended that the associated numerical value include a tolerance of ±10% around the stated numerical value. When ranges are specified, the range includes all values therebetween such as increments of 0.1%.

### Electrode Assembly

Some example embodiments include an electrode assembly including an electrode current collector, an electrode active material layer on the electrode current collector, and a coating layer disposed on the electrode active material layer and integrated with the electrode active material layer. The coating layer includes a polymer nanofiber, the polymer nanofiber includes a first binder and a second binder, the first binder includes polyimide, the second binder includes at least one of polyvinylidene fluoride, polyvinylidene fluoride-trifluoroethylene, polyvinylidene fluoride-tetrafluoroethylene, polyvinylidene fluoride-hexafluoropropylene, polyvinylidene fluoride-trifluoroethylene-chlorotrifluoroethylene, polyamide, styrene butadiene rubber, carboxymethyl cellulose, an epoxy resin, polymethyl methacrylate, or a combination thereof.

Recent battery technology is evolving toward demanding high energy density and stability simultaneously or contemporaneously. A separator, which reduces or prevents physical contact between electrodes in a battery but enables free movement of lithium ions, plays a role in performance and stability of the battery. However, conventional separators such as commercially available polyethylene and polypropylene have limitations of deteriorating battery safety, such as heat shrinkage, in high-temperature environments. Accordingly, a new separator technology for replacing the conventional separators is needed.

With a goal of increasing energy density of a rechargeable lithium battery, a technology for manufacturing an electrode assembly has been proposed by integrating at least one electrode active material layer between positive and negative electrode active material layers with a coating layer functioning as a separator instead of separately using the separator. In other words, proposed is a method to enable the battery to function without the separator by coating a polymer nanofiber on the surface of the electrode active material layer.

In particular, because polyimide has desired or improved thermal stability, studies on coating its precursor, polyamic acid, on the electrode active material layer, and then thermally imidizing the polyamic acid. However, the imidization process of the polyamic acid is generally carried out at a high temperature of about 300 °C or higher, which is likely to result in deformation of physical shape or deterioration in properties within the electrodes, and this drawback has a negative impact on performance and stability of the battery.

In order to lower the imidization temperature of the polyamic acid, a quinoline-based derivative may be added thereto to constitute an accelerator, which may reduce or minimize the deformation of physical shape or deterioration in properties within the electrode, and additionally improve electrical spinning properties. However, polymer nanofibers manufactured through this process, even if (when) coated on the electrode surface and integrated therewith, have low mechanical strength, still having a challenge of not reaching a level of commercially available separators.

Accordingly, when the coating layer functioning as a separator is formed, a thermal compression process in addition to the electrospinning process may be performed to secure durability of the coating layer, but the durability that can be secured through this thermal compression process is limited.

Some example embodiments address the aforementioned challenges and integrate the coating layer with the electrode active material layer to provide an electrode assembly replacing conventional separators, and simultaneously or contemporaneously securing desired or improved thermal stability and mechanical strength.

The electrode assembly includes an electrode current collector, an electrode active material layer on the electrode current collector, and a coating layer disposed on the electrode active material layer and integrated with the electrode active material layer.

When the electrode of the electrode assembly is a positive electrode, the electrode current collector may be a positive electrode current collector, and the electrode active material layer may be a positive electrode active material layer. When the electrode of the electrode assembly is a negative electrode, the electrode current collector may be a negative electrode current collector, and the electrode active material layer may be a negative electrode active material layer. Accordingly, the following explanation may be equally applied to either one or both of the positive and negative electrodes.

### Coating layer

The coating layer is disposed on the electrode active material layer and is integrated with the electrode active material layer to constitute a separator. Accordingly, the electrode assembly according to some example embodiments does not require a separate separator and does not require a lamination process for combining the separator and the electrode, so that a battery may be manufactured economically.

The coating layer may be disposed on the electrode active material layer, and for example, the electrode active material layer may be disposed between the electrode current collector and the coating layer.

The term "coating layer integrated with the electrode active material layer" may mean that a portion of the coating layer on the electrode active material layer is incorporated into the electrode active material layer and is firmly bonded thereto. According to some example embodiments, when the electrode assembly is observed using a scanning electron microscope (SEM) or the like, the interface between the electrode active material layer and the coating layer may appear to be uneven.

In the case of polyethylene films generally used as a separator, there may be a challenge in that when exposed to heat, changes in dimensions occur due to heat shrinkage, and the like, and this reduces the separation function of the positive and negative electrodes by the separator, which may result in a short circuit.

Meanwhile, by using an electrode assembly according to some example embodiments, the coating layer that constitutes a separator is integrated with the electrode active material layer, so that a separate separator is not required, and thus the problem of heat shrinkage may not occur, thereby improving heat resistance and reducing resistance.

The coating layer includes polymer nanofibers. For example, the coating layer may include a woven or non-woven structure (hereinafter, or referred to as a woven or non-woven fabric structure) formed by aggregating polymer nanofibers formed by an electrospinning process described below, and desirably may be or include a non-woven structure. The woven or non-woven structure formed by this electrospinning process may have high porosity and low tortuosity, which can improve the mobility of lithium ions compared to polyethylene films commonly used as separators. In addition, due to the whipping phenomenon caused by the electrospinning process, the polymer nanofibers are not oriented in one direction and are isotropic, and due to the multiaxial drawing during the electrospinning process, the polymer chains are not oriented in one direction, so that the relaxation and shrinkage characteristics of the polymer are poor in a high-temperature environment. Accordingly, the structure of the woven or non-woven fabric may contribute to reducing or suppressing heat shrinkage compared to a separator using polyethylene material.

Herein, the expression "a structure formed by aggregating polymer nanofibers" or "aggregation" may mean a state in which a plurality of polymer nanofibers formed, for example, by an electrospinning process are crossed, entangled, contacted, and/or partially fused with each other to form a continuous fibrous network.

For example, whether the polymer nanofibers are aggregated may be confirmed by observing that a plurality of crossing points and entangled structures between the fibers are present in scanning electron microscope (SEM) images or transmission electron microscope (TEM) images, and after a thermal compression process, partial fusion or bonding traces at contact portions between the fibers may be observed.

In an electrode assembly according to some example embodiments, the coating layer includes polymer nanofibers, and the polymer nanofibers include a first binder and a second binder.

The first binder includes polyimide, thereby ensuring desired or improved thermal stability.

The second binder includes at least one of polyvinylidene fluoride (PVDF), polyvinylidene fluoride-trifluoroethylene (PVDF-TRFE), polyvinylidene fluoride-tetrafluoroethylene (PVDF-TEFE), polyvinylidene fluoride-hexafluoropropylene (PVDF-HFP), polyvinylidene fluoride-trifluoroethylene-chlorotrifluoroethylene (PVDF-TRFE-CFE), polyamide (PA), a styrene butadiene rubber (SBR), carboxymethyl cellulose (CMC), an epoxy resin, polymethyl methacrylate (PMMA), or a combination thereof. The second binder has desired or improved binding performance and thermoplastic properties. By introducing such a second binder during the production of polymer nanofibers, the second binder may be combined together when imidizing polyamic acid to form polyimide. This allows the second binder to be partially melted during the thermal compression process for manufacturing the electrode assembly to enhance the integration between the polymer nanofibers, thereby achieving a mechanical strength that is similar to or superior to the mechanical strength of existing separators.

For example, a weight average molecular weight (Mw) of the first binder may be in a range of about 100,000 g/mol to about 1,500,000 g/mol, about 120,000 g/mol to about 1,300,000 g/mol, about 150,000 g/mol to about 1,000,000 g/mol, about 160,000 g/mol to about 800,000 g/mol, or about 180,000 g/mol to about 500,000 g/mol. In this range, side reactions during charging and discharging of rechargeable lithium batteries may be reduced or suppressed, and safety may be effectively secured at high temperatures.

For example, a weight average molecular weight (Mw) of the second binder may be in a range of about 100,000 g/mol to about 1,500,000 g/mol, about 200,000 g/mol to about 1,300,000 g/mol, 300,000 g/mol to about 1,000,000 g/mol, about 350,000 g/mol to about 800,000 g/mol, or about 400,000 g/mol to about 700,000 g/mol. Within this range, binding performance and thermoplastic properties can be secured, which may be advantageous in securing mechanical strength.

For example, the coating layer may include the first binder in an amount in a range of about 20 wt% to about 50 wt%, about 32 wt% to about 49.47 wt%, about 33 wt% to about 49 wt%, about 35 wt% to about 44 wt%, or about 37 wt% to about 42 wt%, based on 100 wt% of the coating layer. Within this range, desired or improved thermal stability and desired or improved mechanical strength may be effectively secured.

For example, the coating layer may include the second binder in an amount in a range of about 30 wt% to about 50 wt%, about 33 wt% to about 50.48 wt%, about 35 wt% to about 50 wt%, about 36 wt% to about 46 wt%, or about 38 wt% to about 43 wt%, based on 100 wt% of the coating layer. Within this range, desired or improved thermal stability and desired or improved mechanical strength may be effectively secured.

For example, the coating layer may include the first binder in an amount in a range of about 10 wt% to about 90 wt%, about 20 wt% to about 80 wt%, about 30 wt% to about 70 wt%, about 40 wt% to about 60 wt%, or about 45 wt% to about 55 wt%, based on 100 wt% of a total of the first binder and the second binder. Within this range, thermal stability by the first binder may be harmoniously secured without impairing the effect of securing mechanical strength by the second binder.

For example, the coating layer may include the second binder in an amount in a range of about 10 wt% to about 90 wt%, about 20 wt% to about 80 wt%, or about 30 wt% to about 70 wt%, about 40 wt% to about 60 wt%, or about 45 wt% to about 55 wt%, based on 100 wt% of a total of the first binder and the second binder. Within this range, the mechanical strength by the second binder may be harmoniously secured without impairing the effect of securing thermal stability by the first binder.

For example, in the coating layer, an amount of the second binder may be higher than an amount of the first binder. If (when) the amount of the second binder is higher than the amount of the first binder, the effect of securing thermal stability by the first binder and the effect of securing mechanical strength by the second binder may be improved or maximized.

For example, the coating layer may further include a quinoline-based derivative. In order to implement polyimide, a first binder with desired or improved thermal stability, polyamic acid is used as a precursor, but the imidization process of polyamic acid is performed at high temperatures, which is highly likely to cause physical deformation of the electrode. Therefore, the imidization process may be performed by adding a quinoline-based derivative that constitutes an accelerator capable of lowering the imidization temperature of polyamic acid. The quinoline-based derivative includes nitrogen having an unshared electron pair, and the nitrogen may deprotonate hydrogen present in the amide group of the polyamic acid. In addition, the imidization temperature of the polyamic acid may be lowered by forming a bond between the unshared electron pair of nitrogen present in the amide group and the carbon of the carboxyl group in the polyamic acid. Accordingly, deformation of physical shape or deterioration in properties may be reduced or minimized, and additionally, electrical spinning properties may also be improved.

For example, the quinoline-based derivative may include a compound represented by Chemical Formula 1.

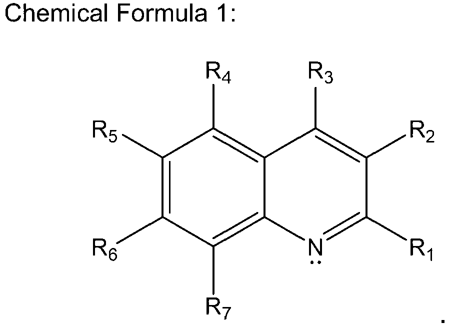

In Chemical Formula 1, R₁ to R₇ may be the same or different, and may be at least one of hydrogen, a halogen, a hydroxyl group, a substituted or unsubstituted C1 to C30 alkyl group, a substituted or unsubstituted C1 to C10 alkylsilyl group, a substituted or unsubstituted C6 to C30 arylsilyl group, a substituted or unsubstituted C3 to C30 cycloalkyl group, a substituted or unsubstituted C3 to C30 heterocycloalkyl group, a substituted or unsubstituted C6 to C30 aryl group, a substituted or unsubstituted C2 to C30 heteroaryl group, a substituted or unsubstituted C1 to C20 alkoxy group, or a combination thereof.

For example, R₁ to R₇ may each independently be at least one of hydrogen, a halogen group, a hydroxyl group, a substituted or unsubstituted C1 to C30 alkyl group, or a combination thereof. For example, when all of R₁ to R₇ are hydrogen, the quinoline-based derivative may correspond to quinoline.

For example, a boiling point of the quinoline-based derivative may be in a range of about 150 °C to about 300 °C, and for example, the boiling point of the quinoline-based derivative may be about 200 °C to about 300 °C, about 150 °C to a 250 °C, about 200 °C to about 250 °C, or about 200 °C to about 240 °C.

For example, a vapor pressure of the quinoline-based derivative may be in a range of about 0.1 Pa to about 20 Pa, for example, the vapor pressure of the quinoline-based derivative may be about 0.1 Pa to about 10 Pa, about 1 Pa to about 20 Pa, about 1 Pa to about 10 Pa, about 5 Pa to about 20 Pa, or about 5 Pa to about 10 Pa.

For example, if (when) the boiling point of the quinoline-based derivative is less than about 150 °C, or the vapor pressure is more than about 20 Pa, the quinoline-based derivative may vaporize at the beginning of the thermal imidization reaction, and thus its role as an accelerator for the low-temperature imidization reaction may be reduced. In addition, if (when) the boiling point of the quinoline-based derivative exceeds about 300 °C, or the vapor pressure is less than about 0.1 Pa, an excessive amount of the quinoline-based derivative may remain in the coating layer after thermal imidization, which may increase the battery resistance.

For example, in the coating layer, the polymer nanofibers may be present in an amount in a range of about 50 wt% to about 100 wt%, about 65 wt% to about 99.95 wt%, about 68 wt% to about 99 wt%, about 71 wt% to about 90 wt%, or about 75 wt% to about 85 wt% based on 100 wt% of the coating layer.

For example, in the coating layer, the quinoline-based derivative may be included in an amount that is less than or equal to about 50 wt% (including 0 wt%), in a range of about 0.05 wt% to about 35 wt%, about 1 wt% to about 32 wt%, about 10 wt% to about 29 wt%, or about 12 wt% to about 25 wt%, based on 100 wt% of the coating layer. Within this range, the quinoline-based derivative can effectively contribute to securing thermal stability by the first binder, polyimide, without impairing the performance of the rechargeable lithium battery.

For example, a diameter of the polymer nanofibers may be in a range of about 10 nm to about 1,000 nm, about 50 nm to about 400 nm, or about 50 nm to about 300 nm. Within this range, a highly porous woven or non-woven structure may be formed, which may improve the mobility of lithium ions. Herein, the diameter of the polymer nanofiber may be measured by a method known to those skilled in the art, for example, by a transmission electron microscope image or a scanning electron microscope image.

In some example embodiments, the coating layer may further include inorganic particles, which may offset the disadvantages of a woven or non-woven structure formed by aggregating polymer nanofibers within the coating layer. The woven or non-woven structure formed by the aggregation of the polymer nanofibers has a high porosity, which may mean that the surface area of the electrode active material layer that is exposed without contact with the polymer nanofibers is high. As the exposure area of the electrode active material layer increases, there is an advantage in that the mobility of lithium ions is improved, but there are also disadvantages in that lithium dendrites may readily grow, and short circuits may readily occur. The lithium dendrites are one of the main causes of short circuits in rechargeable lithium batteries, so that their growth needs to be reduced or suppressed. The inorganic particles may contribute to improving the safety and cycle-life of rechargeable lithium batteries by physically inhibiting the growth of lithium dendrites.

For example, the inorganic particles may include at least one of Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, or a combination thereof. When the above-mentioned inorganic particles are used, the growth of lithium dendrites may be effectively reduced or suppressed.

For example, the average particle diameter (D₅₀) of the inorganic particles may be in a range of about 10 nm to about 1,000 nm, about 25 nm to about 500 nm, or about 50 nm to about 200 nm. If (when) this is satisfied, the average particle diameter (D₅₀) may contribute to improving the safety and cycle-life of the battery without hindering the effect of securing high heat resistance by polymer nanofibers in the coating layer. As used herein, when a definition is not otherwise provided, the average particle diameter (D₅₀) indicates a diameter of a particle where a cumulative volume is about 50 volume% in a particle size distribution.

For example, the inorganic particles may be included in an amount that is less than or equal to about 50 wt% (including 0 wt%), in a range of about 0.001 wt% to about 35 wt%, about 0.005 wt% to about 32 wt%, about 0.01 wt% to about 29 wt%, about 0.05 wt% to about 25 wt%, or about 0.05 wt% to about 10 wt%, based on 100 wt% of the coating layer. Within this range, the effect of securing high heat resistance by polymer nanofibers in the coating layer and the effect of securing safety and improving cycle-life by inorganic particles may be harmonized with each other.

In some example embodiments, the coating layer may further include a woven or non-woven structure formed by aggregating the polymer nanofibers, and an inorganic particle coating layer including inorganic particles. If (when) the above is satisfied, the effect of securing high heat resistance by the woven or non-woven structure within the coating layer and the effect of securing safety and improving cycle-life by the inorganic particle coating layer may be harmoniously achieved.

For example, the distribution of the inorganic particles may gradually decrease from an upper portion of the coating layer to a lower portion of the coating layer. For example, the lower portion of the coating layer may represent a surface where the coating layer comes into contact with the electrode active material layer, and the upper portion of the coating layer may represent an opposite surface of the surface where the coating layer comes into contact with the electrode active material layer. When the inorganic particles are distributed on the surface of the electrode active material layer, the inorganic particles may also constitute a resistor that inhibits the insertion of lithium ions into the electrode active material layer. Therefore, after the electrospinning process using the polymer composition, by performing electrospraying using an inorganic particle composition including the inorganic particles, the distribution of the inorganic particles may exhibit a gradient in which the distribution gradually decreases from an upper portion of the coating layer to a lower portion of the coating layer. If (when) the above is satisfied, the resistance on the surface of the electrode active material layer may be reduced.

For example, the thickness of the coating layer may be in a range of about 5 µm to about 40 µm, for example about 6 µm to about 20 µm, or about 7 µm to about 16 µm. If (when) the above is satisfied, the coating layer may be manufactured by performing a thermal compression process after an electrospinning process and an electrospraying process, thereby forming a thinner thickness than a coating layer manufactured only through an electrospinning process and an electrospraying process, thereby ensuring safety by the aforementioned coating layer while also securing a high energy density.

For example, a ratio of a thickness of the coating layer to a thickness of the electrode active material layer may be in a range of about 1:1 to about 1:50, about 1:1.5 to about 1:40, about 1:2 to about 1:30, or about 1:2.3 to about 1:28. Within this range, the effect of securing thermal stability by the coating layer and the effect of securing charge/discharge and cycle-life performance by the electrode active material layer may be harmonized with each other.

For example, the electrode assembly may have an average tensile strength in a range of about 23 MPa to about 60 MPa, about 25 MPa to about 58 MPa, or about 26 MPa to about 50 MPa.

For example, the electrode assembly may have a maximum tensile strength in a range of about 27 MPa to about 70 MPa, about 27.5 MPa to about 60 MPa, or about 28 MPa to about 55 MPa.

For example, the electrode assembly may have an average tensile strain in a range of about 3% to about 12%, about 5% to about 11%, or about 6% to about 10%.

For example, the electrode assembly may have an average modulus of elasticity in a range of about 500 MPa to about 2000 MPa, about 600 MPa to about 1500 MPa, or about 610 MPa to about 1450 MPa.

### Method for Manufacturing Electrode Assembly

Hereinafter, a method for manufacturing an electrode assembly according to some example embodiments is described. The method for manufacturing the electrode assembly includes forming an electrode active material layer on an electrode current collector, preparing a polymer composition by mixing polyamic acid, a quinoline-based derivative, and a second binder in a solvent, and electrospinning the polymer composition on the electrode active material layer. The second binder includes at least one of polyvinylidene fluoride, polyvinylidene fluoride-trifluoroethylene, polyvinylidene fluoride-tetrafluoroethylene, polyvinylidene fluoride-hexafluoropropylene, polyvinylidene fluoride-trifluoroethylene-chlorotrifluoroethylene, polyamide, styrene butadiene rubber, carboxymethyl cellulose, an epoxy resin, polymethyl methacrylate, or a combination thereof.

The descriptions relate to a method for manufacturing an electrode assembly, which is some example embodiments, and the descriptions with respect to the electrode assembly is equally applicable. Therefore, in the following, redundant descriptions of the aforementioned electrode assembly are omitted, and the manufacturing processes of the electrode assembly, which is an example of some example embodiments, is described in detail.

First, an electrode active material layer is formed on the electrode current collector. For example, an electrode active material layer may be formed by coating a slurry for an electrode active material layer including an electrode active material on the electrode current collector, drying, and compressing the electrode current collector. At this time, the slurry for the electrode active material layer may further include a binder, a conductive material, or a combination thereof in addition to the aforementioned electrode active material, and the description given below may be applied to this, and the general contents in the relevant technical field may be equally applied to the coating, drying, and compressing methods.

Afterwards, a polymer composition is prepared by mixing polyamic acid, a quinoline-based derivative, and a second binder into a solvent.

For example, the solvent may be or include an organic solvent, and for example, the solvent may include at least one of methyl acetate, t-butyl acetate, dimethylacetamide, dimethylformamide, dimethylformaldehyde, dimethylsulfoxide, N-methylpyrrolidone, ethanol, methanol, chloroform, acetone, water, or a combination thereof.

For example, a mixture of the polyamic acid and the quinoline-based derivative may be first prepared, and a second binder may be added to the mixture and mixed to prepare a polymer composition. At this time, the above mixture may utilize stirring.

The second binder may include at least one of polyvinylidene fluoride (PVDF), polyvinylidene fluoride-trifluoroethylene (PVDF-TRFE), polyvinylidene fluoride-tetrafluoroethylene (PVDF-TEFE), polyvinylidene fluoride-hexafluoropropylene (PVDF-HFP), polyvinylidene fluoride-trifluoroethylene-chlorotrifluoroethylene (PVDF-TRFE-CFE), polyamide (PA), styrene butadiene rubber (SBR), carboxymethyl cellulose (CMC), an epoxy resin, polymethyl methacrylate (PMM), or a combination thereof. By introducing a second binder having desired or improved binding performance and thermoplastic properties during the production of polymer nanofibers, a combination may be formed, and thus, the second binder may be partially melted during the thermal compression process for producing an electrode assembly to enhance integration between polymer nanofibers, thereby realizing mechanical strength similar to or superior to the mechanical strength of existing separators.

Thereafter, the polymer composition is electrosprayed onto the electrode active material layer. By electrospinning the polymer composition, a coating layer including polymer nanofibers may be formed on an electrode active material layer. Through the electrospinning process, a woven or non-woven fabric structure formed by aggregating the polymer nanofibers may be manufactured, and through the electrospinning process, a portion of the polymer nanofibers may be bonded to the electrode active material layer, thereby forming a coating layer integrated with the electrode active material layer.

For example, the electrospinning process may position a nozzle pack and a roller with a tip having a constant hole size at a constant interval, and inject the polymer composition into the tip. Next, after positioning the electrode active material layer on the roller, a voltage in a range of about 10 kV to about 120 kV, about 40 kV to about 90 kV, or about 70 kV to about 80 kV may be applied to the tip. The number of the tips may be adjusted as desired depending on the type and amount of the polymer included in the polymer composition, and may be, for example, in a range of 1 to 200. The predetermined or desired distance between the nozzle pack and the electrode may be in a range of about 5 cm to about 70 cm.

For example, in the electrospinning process, the hole size of the tip may be in a range of about 18 GP to about 30 GP (gauge point), for example, about 21 GP to about 30 GP.

According to the electrospinning process, when the polymer composition emerges from the tip end, charges are accumulated on the surface of the polymer composition by the high voltage, and a cone-shaped Taylor's cone is formed. Afterwards, when the repulsive force of the surface charge becomes greater than the drag force of the solution (i.e., viscous surface tension), a thin jet is ejected from the tip of the cone, and then polymer nanofibers may be formed through multiaxial drawing in the whipping section.

For example, the electrospinning process may be performed under conditions of a relative humidity in a range of about 0.01% to about 30%, or about 0.01% to about 0.25%, at a temperature in a range of about 18 °C to about 25 °C. When the electrospinning process is performed under the above temperature and relative humidity conditions, there may be an advantage in that the polymer nanofibers are spun while maintaining a constant thickness.

For example, the roll speed of the roller may be adjusted so that the woven or non-woven structure may be formed to an appropriate or desired thickness, and may have, for example, a speed in a range of about 0.1 m/min to about 10 m/min, or about 0.1 m/min to about 0.5 m/min. For example, a flow rate of the polymer composition discharged from the tip may be adjusted to discharge at a rate in a range of about 0.01 ml/min to about 100 ml/min.

For example, tip air may be adjusted as desired to reduce or minimize interference between the tips and ensure uniform electrospinning. For example, tip air control may be adjusted by flowing compressed air at a pressure in a range of about 0.01 MPa to about 0.8 MPa.

For example, after performing the electrospinning process, a drying process may be performed using hot air at in a range of about 70 °C to about 110°C.

In some example embodiments, following the electrospinning process, an inorganic particle composition may be electrosprayed onto the woven or non-woven structure to form an inorganic particle coating layer.

For example, the inorganic particle composition may include inorganic particles, a binder, and a solvent, and the above-described description may be equally applied to the inorganic particles. In the inorganic particle composition, the binder may include at least one of polyvinyl alcohol, polyether, polyvinylidene fluoride, polyamideimide, polyvinylpyrrolidone, polyacrylonitrile, a copolymer thereof, or a combination thereof.

In some example embodiments, in the inorganic particle composition, the solvent may include at least one of methyl acetate, t-butyl acetate, dimethylacetamide, dimethylformamide, dimethylformaldehyde, dimethylsulfoxide, N-methylpyrrolidone, ethanol, methanol, chloroform, acetone, water, or a combination thereof.

For example, in the inorganic particle composition, an amount of the inorganic particles may be in a range of about 10 wt% to about 95 wt% based on 100 wt% of the inorganic particlecomposition.

For example, in the process of electrospraying an inorganic particle composition onto the structure of the woven or non-woven fabric, most of the inorganic particles accumulate on the surface of the structure of the woven or non-woven fabric, and some of the inorganic particles may be incorporated into the structure of the woven or non-woven fabric. Accordingly, the woven or non-woven structure may exhibit a gradient in which the distribution of the inorganic particles gradually decreases from the upper portion of the woven or non-woven structure to the lower portion of the woven or non-woven structure.

For example, the electrospraying process may be performed by positioning a nozzle pack with tips having a predetermined or desired hole size and a roller at a predetermined or desired distance and injecting the inorganic particle composition to the tips. Subsequently, after disposing the electrode active material layer on the roller, a voltage in a range of about 10 kV to about 100 kV, a voltage of about 40 kV to about 80 kV, or a voltage of about 50 kV to about 60 kV may be applied to the tips. The number of the tips may be adjusted as desired depending on a type and amount of an inorganic material included in the inorganic particle composition, for example, in a range of about 1 to about 200. The predetermined or desired distance between the nozzle pack and the electrode may be in a range of about 5 cm to about 70 cm.

For example, in the electrospraying process, a hole size of the tip may be in a range of about 18 GP to about 30 GP (gauge point), for example, about 21 GP to about 30 GP.

For example, the electrospraying process may be performed under conditions of a relative humidity in a range of about 0.01% to about 30%, or about 0.01% to about 0.25%, at a temperature in a range of about 18 °C to about 25 °C. When the electrospray process is performed under the above temperature and relative humidity conditions, there may be an advantage in that the inorganic particles are sprayed so as to be relatively evenly distributed by the electrospray.

By the above electrospraying process, the inorganic particle composition may be sprayed onto the electrode active material layer in the form of dots.

Additionally, the roll speed of the roller can be adjusted so that the inorganic particle coating layer can be formed to an appropriate or desired thickness, and can be, for example, a speed in a range of about 0.1 m/min to about 10 m/min. In addition, the flow rate of the inorganic particle composition discharged from the tip can be adjusted to discharge at a rate in a range of about 10 ml/min to about 100 ml/min.

Furthermore, tip air may be adjusted as desired to reduce or minimize interference between the tips and make the electrospraying uniform. For example, the tip air adjustment may be performed by flowing the compressed air at a pressure in a range of about 0.01 MPa to about 0.8 MPa.

After the electrospraying process, a drying process is performed with hot air at a temperature in a range of about 90 °C to about 110 °C.

For example, after the electrospinning process or the electrospraying process, the woven or non-woven structure may be thermally compressed. Through the thermal compression process, the polyamic acid may be imidized and transformed into polyimide, a first binder.

For example, the thermal compression may be performed even in the state of forming the inorganic particle coating layer on the woven or non-woven structure. In this way, when the thermal compression is performed for the woven or non-woven structure having the inorganic particle coating layer, the polyamic acid is not only imidized and transformed into polyimide, a first binder, but also the inorganic particles may be more incorporated into the woven or non-woven structure, so that the polymer nanofibers constituting the woven or non-woven structure may be combined by heat. Accordingly, density of the entire coating layer including the woven or non-woven structure and the inorganic particle coating layer may be increased. Accordingly, compared to the coating layer prepared through the electrospinning process and the electrospraying process alone, the coating layer prepared by additionally performing the thermal compression process may exhibit a reinforced durability thickness that is much thinner and in addition, the coating layer may be adjusted to have a thinner thickness and thus exhibit improved energy density.

For example, the thermal compression process may be performed through a roll press at a pressure in a range of about 0.01 MPa to about 1 MPa, about 0.05 MPa to about 0.5 MPa, or about 0.1 MPa to about 0.5 MPa.

For example, the thermal compression process may be performed through the roll press at a temperature in a range of about 80 °C to about 180 °C, about 90 °C to about 160 °C, or about 100 °C to about 150 °C.

For example, the thermal compression process may be performed through the roll press at a tensile speed in a range of about 10 cm/min to about 50 cm/min, about 15 cm/min to about 45 cm/min, or about 20 cm/min to about 40 cm/min.

### Rechargeable Lithium Battery

Some example embodiments include a rechargeable lithium battery including the aforementioned electrode assembly. For example, a rechargeable lithium battery may have at least one of the positive and negative electrodes corresponding to the aforementioned electrode assembly, and may further include an electrolyte solution. According to some example embodiments, the rechargeable lithium battery may not include a separate separator.

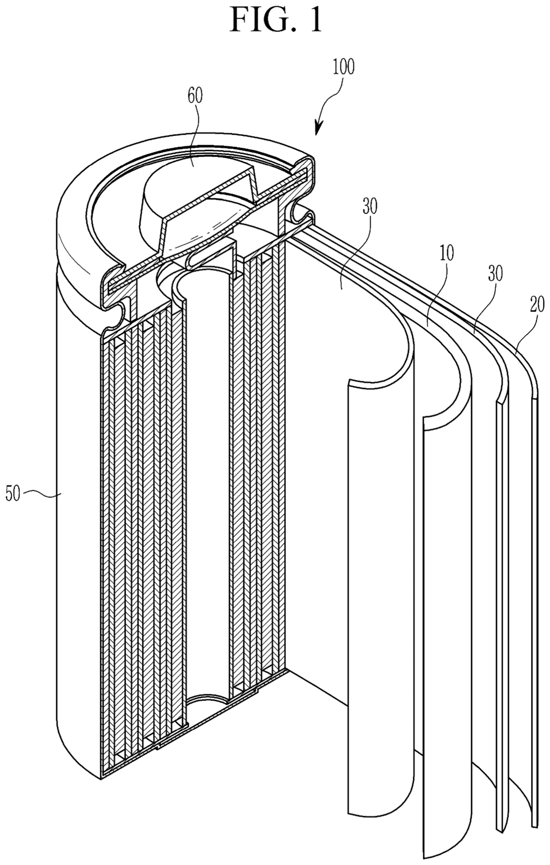

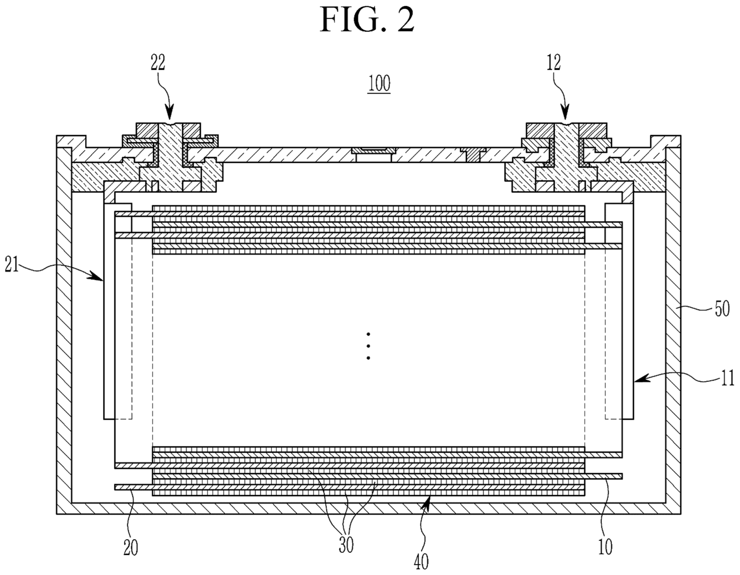

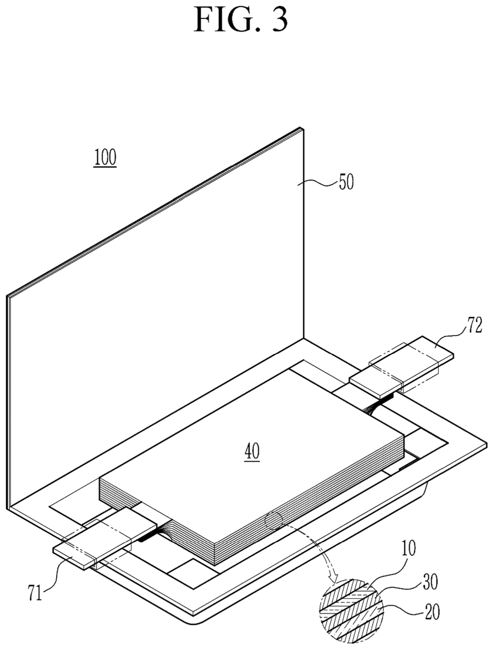

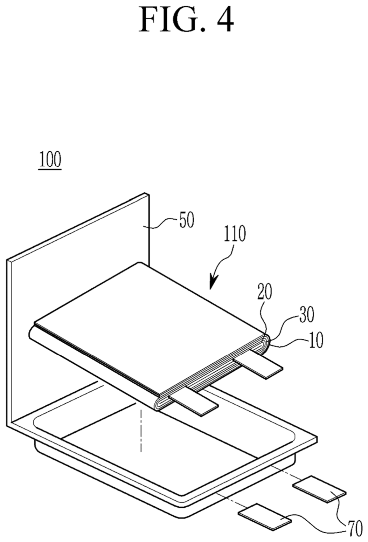

The rechargeable lithium battery may be classified into cylindrical, prismatic, pouch, coin, and the like, depending on the shape. FIG. 1 to FIG. 4 are schematic views illustrating commonly known rechargeable lithium batteries, where FIG. 1 is a cylindrical battery, FIG. 2 is a prismatic battery, and FIG. 3 and FIG. 4 are a pouch-shaped battery.

Referring to FIG. 1 to FIG. 4, a commonly known rechargeable lithium battery 100 includes an electrode assembly 40 with a separator 30 interposed between the positive electrode 10 and the negative electrode 20, and a case 50 in which the electrode assembly 40 is housed. The positive electrode 10, the negative electrode 20, and the separator 30 may be impregnated with an electrolyte solution (not shown). The rechargeable lithium battery 100 may include a sealing member 60 that seals the case 50 as shown in FIG. 1. In FIG. 2, the rechargeable lithium battery 100 may include a positive electrode lead tab 11, a positive electrode terminal 12 connected to the positive electrode lead tab 11, a negative electrode lead tab 21, and a negative electrode terminal 22 connected to the negative electrode lead tab 21. As shown in FIG. 3 and FIG. 4, the rechargeable lithium battery 100 includes an electrode tab 70 illustrated in FIG. 4, or a positive electrode tab 71 and a negative electrode tab 72 illustrated in FIG. 3, the electrode tabs 70/71/72 forming an electric path for inducing the current formed in the electrode assembly 40 to the outside of the rechargeable lithium battery 100.

However, a rechargeable lithium battery according to some example embodiments may exclude the separator 30 from the rechargeable lithium battery form of FIG. 1 to FIG. 4.

### Positive Electrode

The positive electrode may include a positive electrode current collector; and a positive electrode active material layer on the positive electrode current collector, and the positive electrode active material layer may include a positive electrode active material, and may further include a binder, a conductive material, or a combination thereof.

### Positive Electrode Active Material Layer

The positive electrode active material layer includes a positive electrode active material, and the positive electrode active material may include a compound (lithiated intercalation compound) capable of intercalating and deintercalating lithium. For example, the positive electrode active material may be or include at least one of a composite oxide of lithium and a metal such as or including at least one of cobalt, manganese, nickel, and a combination thereof.

The composite oxide may be or include a lithium metal composite oxide, and examples thereof may include at least one of a lithium nickel-based oxide, a lithium cobalt-based oxide, a lithium manganese-based oxide, a lithium metal phosphate, a cobalt-free lithium nickel-manganese-based oxide, a lithium-manganese-rich oxide, or a combination thereof.

As another example, a compound represented by any one of the following chemical formulas may be used. LiₐA_{1-b}X_{b}O_{2-c}D_{c} (0.90 ≤ a ≤ 1.8, 0 ≤ b ≤ 0.5, 0 ≤ c ≤ 0.05); LiₐMn_{2-b}X_{b}O_{4-c}D_{c} (0.90 ≤ a ≤ 1.8, 0 ≤ b ≤ 0.5, 0 ≤ c ≤ 0.05); LiₐNi_{1-b-c}Co_{b}X_{c}O_{2-α}D_{α} (0.90 ≤ a ≤ 1.8, 0 ≤ b ≤ 0.5, 0 ≤ c ≤0.5, 0 ≤ α < 2);LiₐNi_{1-b-c}Mn_{b}X_{c}O_{2-α}D_{α} (0.90 ≤ a ≤ 1.8, 0 ≤ b ≤ 0.5, 0 ≤ c ≤ 0.5, 0 < α < 2);LiₐNi_{b}Co_{c}L¹_{d}GₑO₂ (0.90 ≤ a ≤ 1.8, 0 ≤ b ≤ 0.9, 0 ≤ c ≤ 0.5, 0 ≤ d ≤ 0.5, 0 ≤ e ≤ 0.1); LiₐNiG_{b}O₂ (0.90 ≤ a ≤ 1.8, 0.001 ≤ b ≤ 0.1); LiₐCoG_{b}O₂ (0.90 ≤ a ≤ 1.8, 0.001 ≤ b ≤ 0.1); LiₐMn_{1-b}G_{b}O₂ (0.90 ≤ a ≤ 1.8, 0.001 ≤ b ≤ 0.1); LiₐMn₂G_{b}O₄ (0.90 ≤ a ≤ 1.8, 0.001 ≤ b ≤ 0.1); LiₐMn_{1-g}G_{g}PO₄ (0.90 ≤ a ≤ 1.8, 0 ≤ g ≤ 0.5); Li_{(3-f)}Fe₂(PO₄)₃ (0 ≤ f ≤ 2); LiₐFePO₄ (0.90 ≤ a ≤ 1.8).

In the above chemical formulas, A is or includes at least one of Ni, Co, Mn, or a combination thereof; X is or includes at least one of Al, Ni, Co, Mn, Cr, Fe, Mg, Sr, V, rare-earth element, or a combination thereof; D is or includes at least one of O, F, S, P, or a combination thereof; G is or includes at least one of Al, Cr, Mn, Fe, Mg, La, Ce, Sr, V, or a combination thereof; and L¹ is or includes at least one of Mn, Al or a combination thereof.

For example, the positive electrode active material may include a lithium cobalt-based positive electrode active material in which the cobalt content is greater than or equal to about 30 mol%, greater than or equal to about 50 mol%, or greater than or equal to about 80 mol% based on 100 mol% of metal excluding lithium in the lithium metal composite oxide.

For example, the positive electrode active material may be or include a high-nickel positive electrode active material in which a nickel content is greater than or equal to about 80 mol% based on 100 mol% of metals excluding lithium in a lithium metal composite oxide. In the high-nickel positive electrode active material, the nickel content may be greater than or equal to about 85 mol%, greater than or equal to about 90 mol%, greater than or equal to about 91 mol%, or greater than or equal to about 94 mol%, and less than or equal to about 99 mol%, based on 100 mol% of the metal excluding lithium. The high-nickel positive electrode active materials may achieve high capacity and may be applied to high-capacity, high-density rechargeable lithium batteries.

In the positive electrode active material layer, the binder attaches positive electrode active material particles to each other, and attaches positive electrode active material to adjacent layers. Examples of the binder may include at least one of polyvinyl alcohol, carboxymethyl cellulose, hydroxypropyl cellulose, diacetyl cellulose, polyvinyl chloride, carboxylated polyvinyl chloride, polyvinyl fluoride, an ethylene oxide-containing polymer, polyvinylpyrrolidone, polyurethane, polytetrafluoroethylene, polyvinylidene fluoride, polyethylene, polypropylene, a styrene-butadiene rubber, a (meth)acrylated styrene-butadiene rubber, an epoxy resin, a (meth)acrylic resin, a polyester resin, or nylon, but are not limited thereto.

In the positive electrode active material layer, the conductive material is included to provide electrode conductivity, and any electrically conductive material may be used as a conductive material unless the electrically conductive material causes an adverse chemical change. Examples of the conductive material may include a carbon-based material such as at least one of natural graphite, artificial graphite, carbon black, acetylene black, Ketjen black, a carbon fiber, a carbon nanofiber, a carbon nanotube, and the like; a metal-based material of a metal powder or a metal fiber including at least one of copper, nickel, aluminum, silver, and the like; a conductive polymer such as a polyphenylene derivative; or a mixture thereof.

In the positive electrode active material layer, each amount of the binder and the conductive material may independently be in a range of about 0.5 wt% to about 5 wt%, based on 100 wt% of the positive electrode active material layer.

For example, a thickness of the positive electrode active material layer may be in a range of about 2 µm to about 150 µm, for example about 5 µm to about 140 µm, about 10 µm to about 130 µm, or about 20 µm to about 120 µm.

The positive electrode current collector may be made of or include Al, SUS, or a combination thereof, but is not limited thereto.

### Negative Electrode

The negative electrode may include a negative electrode current collector, and a negative electrode active material layer on the negative electrode current collector. The negative electrode active material layer includes a negative electrode active material, and may further include a binder, a conductive material, or a combination thereof.

### Negative Electrode Active Material

The negative electrode active material may include at least one of a material that reversibly intercalates/deintercalates lithium ions, a lithium metal, a lithium metal alloy, a material capable of doping/dedoping lithium, or transition metal oxide.

The material that reversibly intercalates/deintercalates lithium ions may include, for example crystalline carbon, amorphous carbon, or a combination thereof as a carbon-based negative electrode active material. The crystalline carbon may be irregular, or sheet, flake, spherical, or fiber shaped natural graphite or artificial graphite. The amorphous carbon may be or include at least one of a soft carbon, a hard carbon, a mesophase pitch carbonization product, calcined coke, and the like.

The lithium metal alloy includes an alloy of lithium and a metal such as or including at least one of Na, K, Rb, Cs, Fr, Be, Mg, Ca, Sr, Si, Sb, Pb, In, Zn, Ba, Ra, Ge, Al, and Sn.

The material capable of doping/dedoping lithium may be or include a Si-based negative electrode active material or a Sn-based negative electrode active material. The Si-based negative electrode active material may include at least one of silicon, a silicon-carbon composite, SiOₓ (0<x≤2), a Si-Q alloy (wherein Q is or includes at least one of an alkali metal, an alkaline-earth metal, a Group 13 element, a Group 14 element (excluding Si), a Group 15 element, a Group 16 element, a transition metal, a rare earth element, and a combination thereof, for example at least one of Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Tl, Ge, P, As, Sb, Bi, S, Se, Te, Po, and a combination thereof), or a combination thereof. The Sn-based negative electrode active material may be or includes at least one of Sn, SnO₂, a Sn alloy, or a combination thereof.

The silicon-carbon composite may be or include a composite of silicon and amorphous carbon. An average particle diameter (D₅₀) of the silicon-carbon composite particles may be, for example, in a range of about 0.5 µm to about 20 µm. According to some example embodiments, the silicon-carbon composite may be in the form of silicon particles, and amorphous carbon coated on the surface of the silicon particles. For example, the silicon-carbon composite may include a secondary particle (core) in which silicon primary particles are assembled, and an amorphous carbon coating layer (shell) on the surface of the secondary particle. The amorphous carbon may also be present between the silicon primary particles, for example, the silicon primary particles may be coated with amorphous carbon. The secondary particles may be dispersed in an amorphous carbon matrix.

The silicon-carbon composite may further include crystalline carbon. For example, the silicon-carbon composite may include a core including crystalline carbon and silicon particles, and an amorphous carbon coating layer on the surface of the core. The crystalline carbon may be artificial graphite, natural graphite, or a combination thereof. The amorphous carbon may include at least one of soft carbon, hard carbon, a mesophase pitch carbonized product, and calcined coke.

If (when) the silicon-carbon composite includes silicon and amorphous carbon, an amount of silicon may be in a range of about 10 wt% to about 50 wt% and an amount of amorphous carbon may be in a range of about 50 wt% to about 90 wt% based on 100 wt% of the silicon-carbon composite. In addition, if (when) the composite includes silicon, amorphous carbon, and crystalline carbon, an amount of silicon may be in a range of about 10 wt% to about 50 wt%, an amount of crystalline carbon may be in a range of about 10 wt% to about 70 wt%, and an amount of amorphous carbon may be in a range of about 20 wt% to about 40 wt% based on 100 wt% of the silicon-carbon composite.

Additionally, a thickness of the amorphous carbon coating layer may be in a range of about 5 nm to about 100 nm. An average particle diameter (D₅₀) of the silicon particles (primary particles) may be in a range of about 10 nm to about 1 µm, or about 10 nm to about 200 nm. The silicon particles may be present as silicon alone, in the form of a silicon alloy, or in an oxidized form. The oxidized form of silicon may be represented by SiOₓ (0<x≤2). For example, the atomic content ratio of Si:O, which indicates a degree of oxidation, may be in a range of about 99:1 to about 33:67. As used herein, when a definition is not otherwise provided, an average particle diameter (D₅₀) indicates a diameter of a particle where a cumulative volume is about 50 volume% in a particle size distribution.

The Si-based negative electrode active material or Sn-based negative electrode active material may be mixed with the carbon-based negative electrode active material. When the Si-based negative electrode active material or Sn-based negative electrode active material and the carbon-based negative electrode active material are mixed together, the mixing ratio may be a weight ratio in a range of about 1:99 to about 90:10.

### Binder

The binder adheres the negative electrode active material particles to each other, and adheres the negative electrode active material to the current collector. The binder may be or include a non-aqueous binder, an aqueous binder, a dry binder, or a combination thereof.

The non-aqueous binder may include at least one of polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, polyamideimide, polyimide, or a combination thereof.

The aqueous binder may include at least one of a styrene-butadiene rubber, a (meth)acrylated styrene-butadiene rubber, a (meth)acrylonitrile-butadiene rubber, a (meth)acrylic rubber, a butyl rubber, a fluorine rubber, polyethylene oxide, polyvinylpyrrolidone, polyepichlorohydrin, polyphosphazene, poly(meth)acrylonitrile, an ethylene propylene diene copolymer, polyvinylpyridine, chlorosulfonated polyethylene, latex, a polyester resin, a (meth)acrylic resin, a phenolic resin, an epoxy resin, polyvinyl alcohol, or a combination thereof.

When an aqueous binder is used as the negative electrode binder, a cellulose-based compound capable of imparting viscosity may be further included. As the cellulose-based compound, one or more of carboxymethyl cellulose, hydroxypropylmethyl cellulose, methyl cellulose, or alkali metal salts thereof may be mixed and used. The alkali metal may be or include at least one of Na, K, or Li.

The dry binder may be or include a polymer material capable of becoming a fiber, and may be or include, for example, at least one of polytetrafluoroethylene, polyvinylidene fluoride, a polyvinylidene fluoride-hexafluoropropylene copolymer, polyethylene oxide, or a combination thereof.

### Conductive Material

The conductive material is included to provide electrode conductivity, and any electrically conductive material may be used as a conductive material unless the electrically conductive material causes an adverse chemical change. Examples of the conductive material include a carbon-based material such as at least one of natural graphite, artificial graphite, carbon black, acetylene black, Ketjen black, a carbon fiber, a carbon nanofiber, a carbon nanotube, and the like; a metal-based material of a metal powder or a metal fiber including at least one of copper, nickel, aluminum, silver, and the like; a conductive polymer such as a polyphenylene derivative; or a mixture thereof.

An amount of the negative electrode active material may be in a range of about 95 wt% to about 99.5 wt% based on 100 wt% of the negative electrode active material layer, and an amount of the binder may be in a range of about 0.5 wt% to about 5 wt% based on 100 wt% of the negative electrode active material layer. For example, the negative electrode active material layer may include a range of about 90 wt% to about 99 wt% of the negative electrode active material, a range of about 0.5 wt% to about 5 wt% of the binder, and a range of about 0.5 wt% to about 5 wt% of the conductive material.

### Negative Electrode Current Collector

The negative electrode current collector may include, for example, at least one of indium (In), copper (Cu), magnesium (Mg), stainless steel, titanium (Ti), iron (Fe), cobalt (Co), nickel (Ni), zinc (Zn), aluminum (Al), germanium (Ge), lithium (Li), or an alloy thereof, and may be in the form of a foil, sheet, or foam. A thickness of the negative electrode current collector may be, for example, in a range of about 1 µm to about 20 µm, about 5 µm to about 15 µm, or about 7 µm to about 10 µm.

### Electrolyte

For example, the electrolyte for a rechargeable lithium battery may be or include an electrolyte solution, which may include a non-aqueous organic solvent and a lithium salt.

The non-aqueous organic solvent constitutes a medium for transmitting ions taking part in the electrochemical reaction of a battery. The non-aqueous organic solvent may be or includes at least one of a carbonate-based, ester-based, ether-based, ketone-based, alcohol-based solvent, an aprotic solvent, or a combination thereof.

The carbonate-based solvent may include at least one of dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and the like. The ester-based solvent may include at least one of methyl acetate, ethyl acetate, n-propyl acetate, t-butyl acetate, methyl propionate, ethyl propionate, decanolide, mevalonolactone, valerolactone, caprolactone, and the like. The ether-based solvent may include at least one of dibutyl ether, tetraglyme, diglyme, dimethoxyethane, 2-methyltetrahydrofuran, 2,5-dimethyltetrahydrofuran, tetrahydrofuran, and the like. In addition, the ketone-based solvent may include cyclohexanone, and the like. The alcohol-based solvent may include ethanol, isopropyl alcohol, and the like. The aprotic solvent may include at least one of nitriles such as R-CN (wherein R is a C2 to C20 linear, branched, or cyclic hydrocarbon group, and may include a double bond, an aromatic ring, or an ether bond, and the like); amides such as dimethylformamide; dioxolanes such as 1,3-dioxolane, 1,4-dioxolane, and the like; sulfolanes, and the like.

The non-aqueous organic solvent may be used alone, or in a mixture of two or more types of solvents, and when two or more types of solvents are used in a mixture, a mixing ratio can be adjusted as desired according to the desired battery performance, which is widely known to those working in the field.

When using a carbonate-based solvent, a cyclic carbonate and a chain carbonate may be mixed together, and the cyclic carbonate and the chain carbonate may be mixed in a volume ratio in a range of about 1:1 to about 1:9.

The non-aqueous organic solvent may further include an aromatic hydrocarbon-based organic solvent. For example, a carbonate-based solvent and an aromatic hydrocarbon-based organic solvent may be mixed together in a volume ratio in a range of about 1:1 to about 30:1.

The electrolyte solution may further include at least one of vinylethyl carbonate, vinylene carbonate, or an ethylene carbonate-based compound to improve battery cycle-life.

Examples of the ethylene carbonate-based compound may include at least one of fluoroethylene carbonate, difluoroethylene carbonate, chloroethylene carbonate, dichloroethylene carbonate, bromoethylene carbonate, dibromoethylene carbonate, nitroethylene carbonate, cyanoethylene carbonate, and the like.

The lithium salt dissolved in the organic solvent supplies lithium ions in a battery, enables a basic operation of a rechargeable lithium battery, and improves transportation of the lithium ions between positive and negative electrodes. Examples of the lithium salt may include at least one of LiPF₆, LiBF₄, LiSbF₆, LiAsF₆, LiClO₄, LiAlO₂, LiAlCl₄, LiPO₂F₂, LiCl, Lil, LiN(SO₂C₂F₅)₂, Li(FSO₂)₂N (lithium bis(fluorosulfonyl)imide; LiFSI), LiC₄F₉SO₃, LiN(CₓF₂ₓ₊₁SO₂)(C_{y}F_{2y+1}SO₂) (wherein x and y are integers in a range of 1 to 20), lithium trifluoromethane sulfonate, lithium tetrafluoroethanesulfonate, lithium difluorobis(oxalato)phosphate (LiDFBOP), and lithium bis(oxalato) borate (LiBOB).

A concentration of lithium salt may be within the range of about 0.1 M to about 2.0 M. If (when) the concentration of lithium salt is within the above range, the electrolyte solution has appropriate or desired ionic conductivity and viscosity, and thus desired or improved performance can be achieved and lithium ions can move effectively.

### Separator

As described above, a rechargeable lithium battery according to some example embodiments may not include a separate separator.

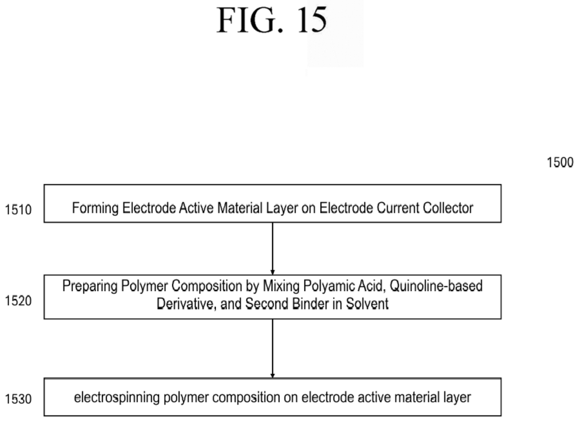

FIG. 15 is a flowchart illustrating a method of manufacturing an electrode assembly, according to an example embodiment. In FIG. 15, the method 1500 includes operation 1510, which includes forming an electrode active material layer on an electrode current collector. Operation 1520 includes preparing a polymer composition by mixing polyamic acid, a quinoline-based derivative, and a second binder in a solvent. In an example, the second binder includes at least one of polyvinylidene fluoride, polyvinylidene fluoride-trifluoroethylene, polyvinylidene fluoride-tetrafluoroethylene, polyvinylidene fluoride-hexafluoropropylene, polyvinylidene fluoride-trifluoroethylene-chlorotrifluoroethylene, polyamide, styrene butadiene rubber, carboxymethyl cellulose, an epoxy resin, polymethyl methacrylate, and a combination thereof. Operation 1530 includes electrospinning the polymer composition on the electrode active material layer.

Examples and comparative examples of the present disclosure are described below. However, the following examples are only examples of the present disclosure, and the present disclosure is not limited to the following examples.

### Example 1

### (1) Manufacturing of Electrode Assembly (Negative Electrode Assembly)

### 1) Formation of Negative Electrode Active Material Layer

97.5 wt% of an artificial graphite negative electrode active material, 1 wt% of carboxymethyl cellulose (CMC), and 1.5 wt% of styrene butadiene rubber (SBR) were mixed in a water solvent to prepare a slurry for forming a negative electrode active material layer. The slurry for forming a negative electrode active material layer was coated on a copper foil, and then dried and compressed to manufacture a negative electrode in which a negative electrode active material layer was formed on the negative electrode current collector.

### 2) Electrospinning

After adding polyamic acid (Mw: 200,000 g/mol measured by GPC) and quinoline to a dimethylformamide solvent, and then stirring the quinoline and dimethylformamide solvent to prepare a mixture, polyvinylidene fluoride (Mw: 495,000 g/mol measured by GPC) was added to the mixture, and then stirred to prepare a polymer composition. Herein, the polymer composition was adjusted to have a solid content of 15 wt%.

Subsequently, the polymer composition was electrosprayed onto the negative electrode active material layer of the negative electrode, and then dried with hot air at 90 °C. Herein, the electrospinning process was performed at 20 °C under relative humidity of 0.01% by positioning a nozzle pack with tips having a hole size of 25 GP and a roller at a distance of 15 cm, putting the polymer composition into the tips, and applying a voltage of 70 kV to 80 kV thereto. In addition, the electrospinning process was performed by setting the roller at a rolling speed of 0.1 m/min to 0.5 m/min, adjusting the polymer composition to be discharged at a flow rate of 1 ml/min from the tips, and flowing compressed air at a pressure of 0.3 MPa.

Through the electrospinning process, a non-woven fabric structure was formed by assembling polymer nanofibers located on the negative electrode active material layer and included in the coating layer integrated with the negative electrode active material layer. Herein, the polymer nanofibers had a diameter of 260 nm, and the non-woven fabric structure had a thickness of 45 µm.

### 3) Heat Compression

After the electrospinning process, a thermal compression process was performed at a pressure of 0.2 Mpa, a temperature of 140 °C, and a tensile speed of 30 cm/min. Accordingly, an electrode assembly was finally obtained therefrom, and the coating layer in the finally obtained electrode assembly had a total thickness of 10 µm.

Herein, in the electrode assembly obtained after the thermal compression process, the polymer nanofiber included 40 wt% of polyimide (Mw: 185,000 g/mol measured by GPC), 19 wt% of quinoline, and 41 wt% of polyvinylidene fluoride based on 100 wt% of a total of the polyimide, the quinoline, and the polyvinylidene fluoride.

### (2) Manufacturing of Positive Electrode

96 wt% of LiCoO₂, 2 wt% of Ketjen black, and 2 wt% of polyvinylidene fluoride were mixed in an N-methyl pyrrolidone solvent to prepare a slurry for forming a positive electrode active material layer. The slurry for forming a positive electrode active material layer was applied on an aluminum foil, and then dried and compressed to form a positive electrode active material layer with a thickness of about 30 µm, manufacturing a positive electrode.

### (3) Manufacturing of Rechargeable Lithium Battery Cell

The negative electrode assembly and the positive electrode were laminated, so that the coating layer of the negative electrode assembly were in contact with the positive electrode, and then an electrolyte solution was injected thereinto to manufacture a rechargeable lithium battery cell. Herein, the electrolyte solution was prepared by mixing ethylene carbonate and dimethyl carbonate in a volume ratio of 3:7 and dissolving 1 M LiPF₆ in the mixed solvent.

### Example 2

A negative electrode assembly and a rechargeable lithium battery cell were manufactured substantially in the same manner as in Example 1 except that the polymer composition was prepared by using polyvinylidene fluoride-hexa fluoro propylene (PVDF-HFP) (Mw: 400,000 g/mol measured by GPC) instead of the polyvinylidene fluoride (PVDF).

### Example 3

A negative electrode assembly and a rechargeable lithium battery cell were manufactured substantially in the same manner as in Example 1 except that the polymer composition was prepared by using poly amide (PA) (Mw: 100,000 g/mol measured by GPC) instead of the polyvinylidene fluoride (PVDF).

### Example 4

A negative electrode assembly and a rechargeable lithium battery cell were manufactured substantially in the same manner as in Example 1 except that the polymer composition was prepared by using styrene butadiene rubber (SBR) (Mw: 150,000 g/mol measured by GPC) instead of the polyvinylidene fluoride (PVDF).

### Example 5

A negative electrode assembly and a rechargeable lithium battery cell were manufactured substantially in the same manner as in Example 1 except that the polymer composition was prepared by using carboxymethyl cellulose (CMC) (Mw: 1,000,000 g/mol measured by GPC) instead of the polyvinylidene fluoride (PVDF).

### Example 6

A negative electrode assembly and a rechargeable lithium battery cell were manufactured substantially in the same manner as in Example 1 except that the polymer composition was prepared by using an epoxy resin instead of the polyvinylidene fluoride (PVDF).

### Example 7

A negative electrode assembly and a rechargeable lithium battery cell were manufactured substantially in the same manner as in Example 1 except that the polymer composition was prepared by using polymethyl methacrylate (PMMA) (Mw: 350,000 g/mol measured by GPC) instead of the polyvinylidene fluoride (PVDF).

### Comparative Example 1

A negative electrode assembly and a rechargeable lithium battery cell were manufactured substantially in the same manner as in Example 1 except that the polymer composition was prepared by not using the polyvinylidene fluoride (PVDF), and the coating layer had a total thickness of 13 µm through the thermal compression process.

### Comparative Example 2

A negative electrode assembly and a rechargeable lithium battery cell were manufactured substantially in the same manner as in Example 1 except that the electrode assembly was not manufactured, but a multi-layered coating separator (thickness: 13 µm, Asahi Kasei Corp.) based on polyethylene (PE) and containing a ceramic layer and an adhesive layer, and an electrolyte solution prepared by dissolving 1M LiPF₆ in a mixed solvent of ethylene carbonate and dimethyl carbonate in a volume ratio of 3:7, were used with a positive electrode and a negative electrode in a conventional method.

### Evaluation Example 1: Scanning Electron Microscope (SEM) Evaluation

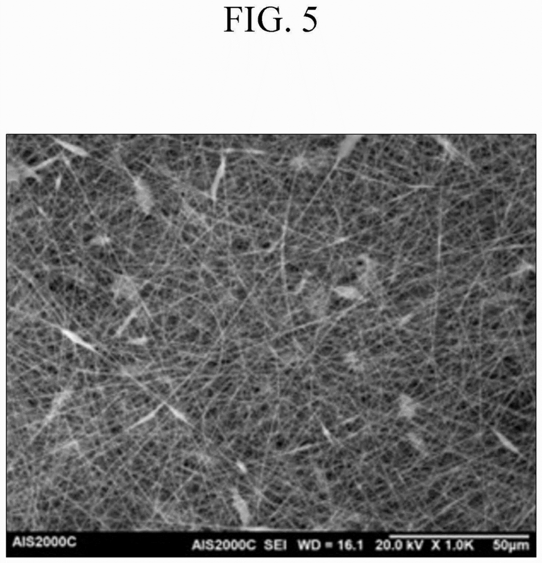

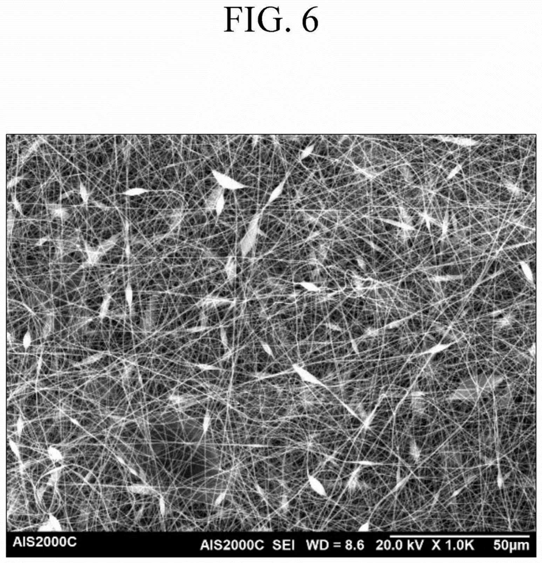

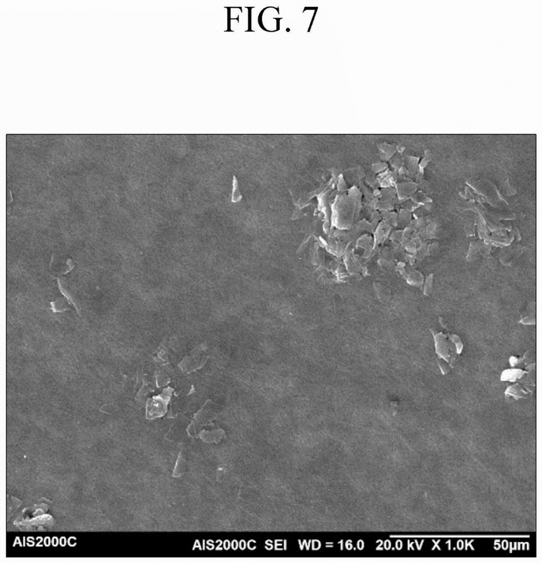

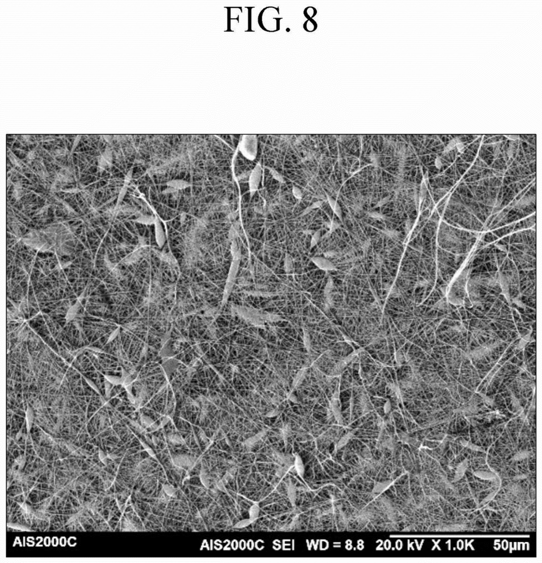

The electrode assemblies of Example 1 and Comparative Example 1 were taken scanning electron microscope (SEM) images of the surface of the coating layers immediately after the electrospinning process, and the images are respectively shown in FIG. 5 and FIG. 6. In addition, the electrode assemblies of Example 1 and Comparative Example 1 were taken scanning electron microscope (SEM) images of the surface of the coating layers after the thermal compression process, and the images are respectively shown in FIG. 7 and FIG. 8.

Referring to FIG. 5 to FIG. 8, Example 1, in which polymer composition was prepared by using polyvinylidene fluoride with polyamic acid containing quinoline, was confirmed to exhibit a difference in the appearance immediately after the electrospinning process (FIG. 5) and after the thermal compression process (FIG. 7). The reason is that in Example 1, in which polymer composition was prepared by additionally using the polyvinylidene fluoride, the electrode assembly was sufficiently pressed during the thermal compression process, and thus exhibited the appearance difference between the surface immediately after the electrospinning process and the surface immediately after the thermal compression process.

In contrast, Comparative Example 1, in which polymer composition was prepared by adding no polyvinylidene fluoride but using polyamic acid containing quinoline, was confirmed to have no difference in the appearance between the surface immediately after the electrospinning process (FIG. 6) and the surface immediately after the thermal compression process (FIG. 8). Accordingly, it was confirmed that in Comparative Example 1, in which polymer composition was prepared by additionally using no polyvinylidene fluoride, the electrode assembly was not sufficiently pressed during the thermal compression process and exhibited no appearance difference between the surface immediately after the electrospinning process and the surface immediately after the thermal compression process.

### Evaluation Example 2: Evaluation of Mechanical Properties

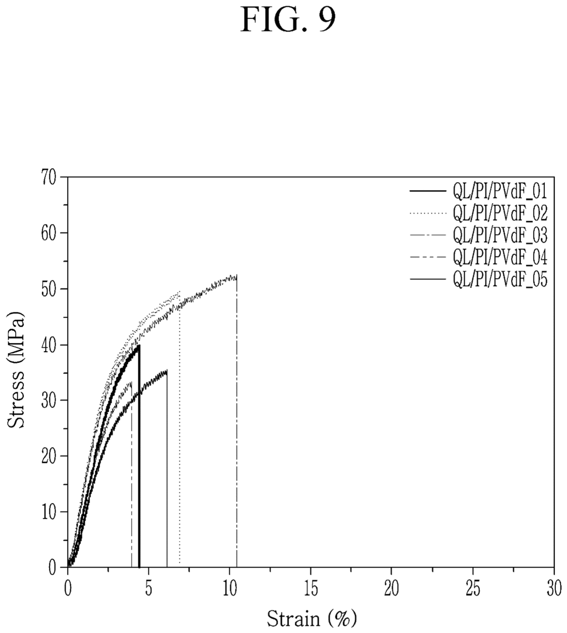

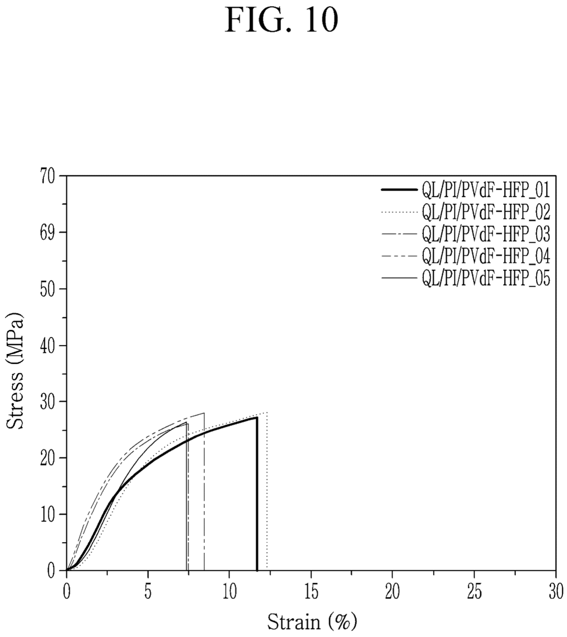

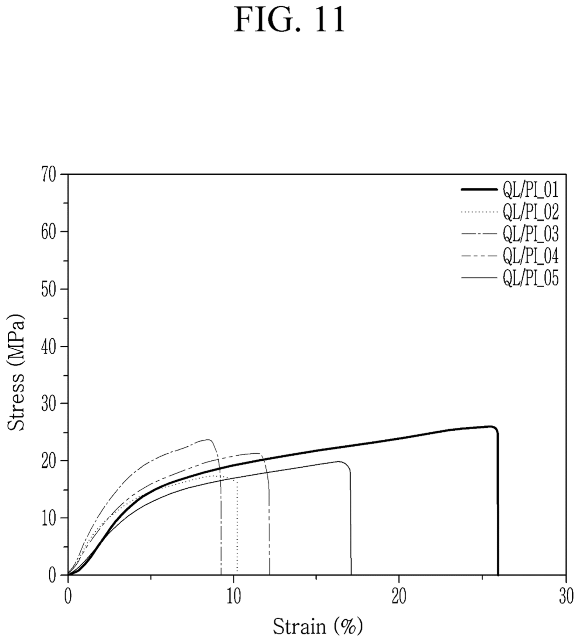

In order to evaluate mechanical properties of the electrode assemblies of Examples 1 and 2 and Comparative Example 1, each sample was manufactured by five to conduct a tensile test, and the results of measuring stress changes according to strain are shown in FIG. 9 to FIG. 11.

Herein, the samples had each gauge length and width of 250 mm and 10 mm according to ASTM D882 standard, and after applying a tensile load to the samples at a tensile speed of 100 mm/min, until the samples were broken to measure a maximum load at which the samples were broken, the maximum load was divided by an initial cross-sectional area of each of the samples to obtain maximum tensile strength (Strength, MPa). An elastic modulus (Young' s modulus) was calculated by measuring a slope within an elastic strain region of 0.05% to 0.25% in a stress-strain curve. In addition, referring to the tensile test results of FIG. 9 to FIG. 11, average tensile strength, maximum tensile strength, standard deviation of the tensile strength, average tensile strain, standard deviation of the tensile strain, average elastic modulus, and standard deviation of the elastic modulus were obtained, and the results are shown in Table 1 below.

**Table 1:**

| | Example 1 | Example 2 | Comparative Example 1 |
|---|---|---|---|
| Average tensile strength | 42.10 MPa | 27.29 MPa | 21.92 MPa |
| Maximum tensile strength | 52.53 MPa | 28.19 MPa | 26.24 MPa |
| Standard deviation of tensile strength | 7.65 MPa | 0.83 MPa | 3.02 MPa |
| Average tensile strain | 6.29% | 9.36% | 14.19% |
| Standard deviation of tensile strain | 2.32% | 2.11% | 6.34% |
| Average elastic modulus | 1419.19 MPa | 610.03 MPa | 431.09 MPa |
| Standard deviation of elastic modulus | 203.54 MPa | 108.85 MPa | 109.89 MPa |

Referring to FIG. 9 to FIG. 11 and Table 1 above, Examples 1 and 2 were confirmed to have higher average tensile strength and maximum tensile strength, lower average tensile strain and standard deviation of the tensile strain, and higher average elastic modulus than Comparative Example 1. Accordingly, the electrode assemblies of Examples 1 and 2, compared to the electrode assembly of Comparative Example 1, was confirmed to exhibit improved mechanical strength by additionally using polyvinylidene fluoride and polyvinylidene fluoride-hexafluoro propylene to prepare the polymer compositions.

### Evaluation Example 3: Evaluation of Initial Charge/discharge Performance

The rechargeable lithium battery cells of Examples 1 to 7 and Comparative Examples 1 and 2 were charged to an upper limit voltage of 4.25 V at a constant current of 0.1 C and to a constant voltage of 0.05 C at the constant voltage, and then discharged to a cut-off voltage 2.5 V at the 0.1 C at 25 °C for initial formation, and then measured with respect to initial charge capacity and initial discharge capacity, which were used to calculate a ratio of the latter to the former as initial efficiency, and the results are shown in Table 2 below.

**Table 2:**

| | Initial charge capacity (mAh/g) | Initial discharge capacity (mAh/g) | Initial efficiency (%) |
|---|---|---|---|
| Example 1 | 151 | 142 | 94 |
| Example 2 | 152 | 140 | 93 |
| Example 3 | 153 | 138 | 90 |
| Example 4 | 155 | 147 | 95 |
| Example 5 | 150 | 136 | 91 |
| Example 6 | 130 | 118 | 90 |
| Example 7 | 151 | 142 | 94 |
| Comparative Example 1 | 152 | 136 | 89 |
| Comparative Example 2 | 155 | 139 | 89 |

As shown in Table 2 above, the rechargeable lithium battery cells of Examples 1 to 7, compared to the rechargeable lithium battery cells of Comparative Examples 1 and 2, were confirmed to exhibit desired or improved initial efficiency.

### Evaluation Example 4: Rate Evaluation

The rechargeable lithium battery cells of Example 1 and Comparative Example 2 were two cycles repeatedly charged to an upper limit voltage of 4.25 V at a constant current of 0.1 C and to 0.05 C at the constant voltage, and then discharged to a cut-off voltage 2.5 V at the 0.1 C at 25 °C. Subsequently, for rata evaluation, the cells were five cycles repeatedly charged at a constant current of 0.3 C and then discharged respectively at 0.3 C, 0.5 C, 1 C, 2 C, and 0.3 C within a voltage range of 2.5 V to 4.25 V at 25 °C.

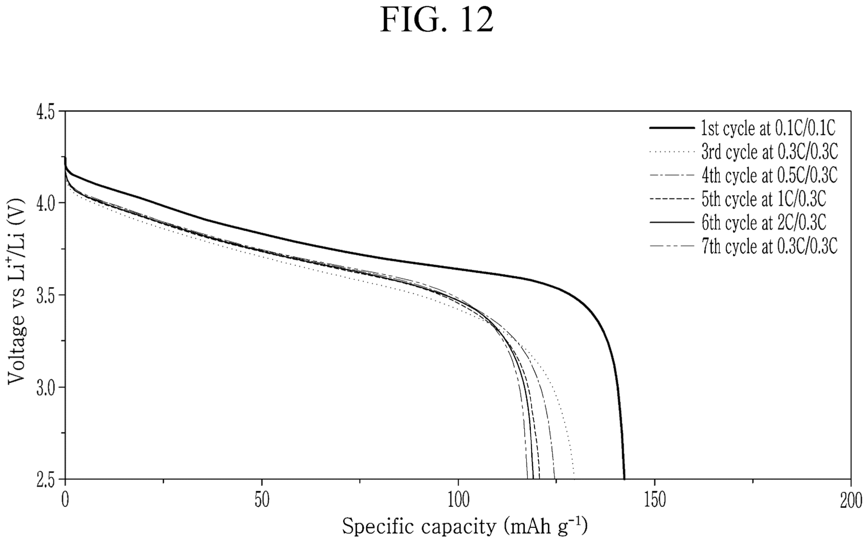

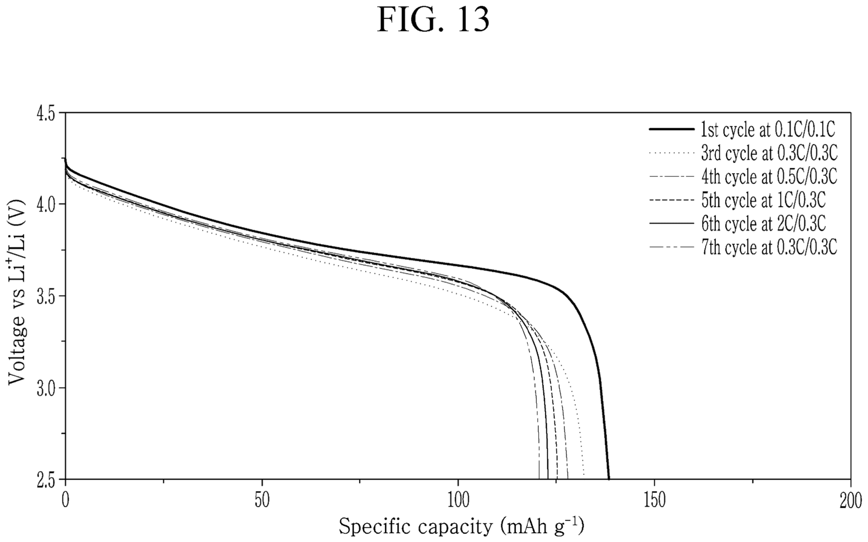

In the rate evaluation process, discharge curves according to rates of the rechargeable lithium battery cells of Example 1 and Comparative Example 2 are respectively shown in FIGS. 12 and 13.

Referring to FIGS. 12 and 13, Example 1 using the coating layer in an electrode assembly with a thickness of 10 µm, which became thinner than Comparative Example 2 using a commercially available separator with a thickness of 13 µm, was confirmed to exhibit similar capacity increase and rate performance at the beginning of the cycle and thus equivalent performance to Comparative Example 2.

### Evaluation Example 5: Evaluation of Thermal Stability

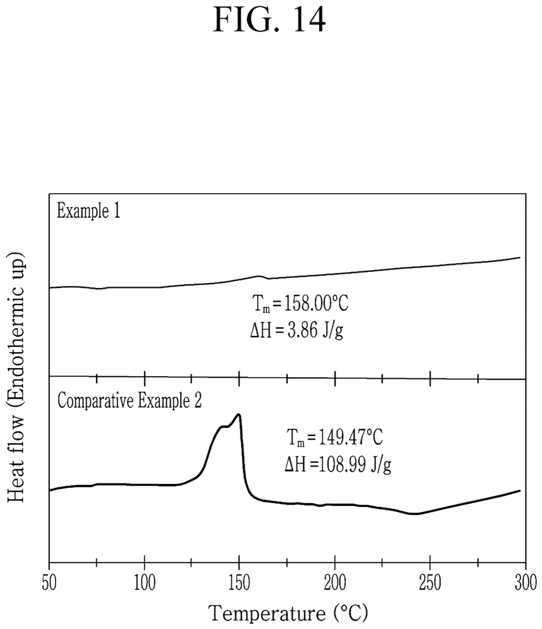

In order to evaluate thermal stability, the electrode assembly of Example 1 and the commercially available separator of Comparative Example 2 were measured with respect to differential scanning calorimetry (DSC) within a temperature range of 50 °C to 300 °C at a heating speed of 10 °C/min, and the results are shown in FIG. 14.

Referring to FIG. 14, compared to Comparative Example 2 using a poly olefin-based binder as a separator, the electrode assembly of Example 1 exhibited no significant endothermic peak, even though polyvinylidene fluoride having a melting point of 160 °C was complexed with the coating layer, which suggested there was no melting phenomenon. Meanwhile, Comparative Example 2 exhibited a very high endothermic peak and an enthalpy change (ΔH) at 150 °C, which suggested that the separator was melted. Accordingly, Example 1 was confirmed to exhibit more desired or improved thermal stability than Comparative Example 2.

### Evaluation Example 6: Evaluation of Content of Quinoline

In order to evaluate a content of quinoline in the coating layer of the electrode assembly of Example 1, Example 1 was subjected to ¹H NMR analysis at 25 °C by using a 400 MHz spectrometer with a pulse width of 90 ° around 0 to 12 ppm, and the analysis result was used to measure the content of quinoline, which is shown in Table 3 below.

**Table 3:**

| | Content of quinoline (wt%) |
|---|---|
| Example 1 | 13 |

Referring to Table 3 above, the coating layer of the electrode assembly of Example 1 was confirmed to include a small amount of the quinoline.

While this disclosure has been described in connection with what is presently considered to be practical example embodiments, it is to be understood that the disclosure is not limited to the disclosed example embodiments. On the contrary, the disclosure is intended to cover various modifications and equivalent arrangements included within the spirit and scope of the appended claims.

### Description of Symbols:

| | | | |
|---|---|---|---|
| 100: | rechargeable lithium battery | 10: | positive electrode |
| 11: | positive electrode lead tab | 12: | positive electrode terminal |
| 20: | negative electrode | 21: | negative electrode lead tab |
| 22: | negative electrode terminal | 30: | separator |
| 40: | electrode assembly | 50: | case |
| 60: | sealing member | 70: | electrode tab |
| 71: | positive electrode tab | 72: | negative electrode tab |

## Claims

1. An electrode assembly, comprising:
an electrode current collector;
an electrode active material layer on the electrode current collector; and
a coating layer disposed on the electrode active material layer and integrated with the electrode active material layer; wherein:
the coating layer includes a polymer nanofiber,
the polymer nanofiber includes a first binder and a second binder,
the first binder includes polyimide, and
the second binder includes at least one of polyvinylidene fluoride, polyvinylidene fluoride-trifluoroethylene, polyvinylidene fluoride-tetrafluoroethylene, polyvinylidene fluoride-hexafluoropropylene, polyvinylidene fluoride-trifluoroethylene-chlorotrifluoroethylene, polyamide, styrene butadiene rubber, carboxymethyl cellulose, an epoxy resin, polymethyl methacrylate, and a combination thereof.

2. The electrode assembly as claimed in claim 1, wherein the coating layer comprises a structure formed by aggregating the polymer nanofibers.

3. The electrode assembly as claimed in claim 1 or 2, wherein the coating layer further comprises a quinoline-based derivative.

4. The electrode assembly as claimed in any of the claims 1 to 3, wherein the coating layer comprises the quinoline-based derivative in an amount in a range of 0.05 wt% to 35 wt% based on 100 wt% of the coating layer.

5. The electrode assembly as claimed in any of the claims 1 to 4, wherein a weight average molecular weight of the first and/or the second binder is in a range of 100,000 g/mol to 1,500,000 g/mol.

6. The electrode assembly as claimed in any of the claims 1 to 5, wherein the coating layer comprises a range of 10 wt% to 90 wt% of the first binder and/or a range of 10 wt% to 90 wt% of the second binder based on 100 wt% of a total of the first binder and the second binder.

7. The electrode assembly as claimed in any of the claims 1 to 6, wherein a diameter of the polymer nanofiber is in a range of 10 nm to 1,000 nm.

8. The electrode assembly as claimed in any of the claims 1 to 7, wherein the coating layer further comprises inorganic particles, whereby preferably the inorganic particles comprise at least one of Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and a combination thereof.

9. The electrode assembly as claimed in any of the claims 1 to 8, wherein an average particle diameter D₅₀ of the inorganic particles is in a range of 10 nm to 1,000 nm.

10. The electrode assembly as claimed in any of the claims 1 to 9, wherein the polymer nanofiber is included in an amount in a range of 50 wt% to 100 wt% based on 100 wt% of the coating layer.

11. The electrode assembly as claimed in any of the claims 1 to 10, wherein a thickness of the coating layer is in a range of 5 µm to 40 µm.

12. The electrode assembly as claimed in any of the claims 1 to 11, wherein a ratio of a thickness of the coating layer to a thickness of the electrode active material layer is in a range of 1:1 to 1:50.

13. The electrode assembly as claimed in any of the claims 1 to 12, wherein the coating layer comprises:
a structure formed by aggregating the polymer nanofibers; and
an inorganic particle coating layer including inorganic particles.,
wherein preferably a distribution of the inorganic particles gradually decreases from an upper portion to a lower portion of the coating layer.

14. A method for manufacturing an electrode assembly of claim 1, the method comprising:
forming an electrode active material layer on an electrode current collector;
preparing a polymer composition by mixing polyamic acid, a quinoline-based derivative, and a second binder in a solvent; and
electrospinning the polymer composition on the electrode active material layer;
wherein the second binder comprises at least one of polyvinylidene fluoride, polyvinylidene fluoride-trifluoroethylene, polyvinylidene fluoride-tetrafluoroethylene, polyvinylidene fluoride-hexafluoropropylene, polyvinylidene fluoride-trifluoroethylene-chlorotrifluoroethylene, polyamide, styrene butadiene rubber, carboxymethyl cellulose, an epoxy resin, polymethyl methacrylate, and a combination thereof.

15. A rechargeable lithium battery comprising the electrode assembly as claimed in any of the claims 1 to 13.
